# EUROPEAN PATENT APPLICATION

(11) **EP 4 831 135 A1**
(43) Date of publication of application: **28.10.2026**
(21) Application number: 26169841.9
(22) Date of filing: 31.03.2026
(51) Int. Cl.: C03B 37/012, C03B 37/027

(54) **HOLLOW CORE FIBER PERFORM ASSEMBLY**

(30) Priority: 21.04.2025 IN 202511038012
(71) Applicant: Sterlite Technologies Limited, Gurugram, Haryana 122102 (IN)
(72) Inventor: BALAKRISHNAN, Ranjith, 122102 Gurugram (IN); MUNIGE, Srinivas, 122102 Gurugram (IN); PANDEY, Anand, 122102 Gurugram (IN)
(74) Representative: Valet Patent Services Limited

(57) **Abstract**

The present disclosure relates to a hollow core glass preform(100) assembly comprises a first cylindrical hollow tube (102) defined by a first diameter, a plurality of second tubes (106) disposed within the first cylindrical hollow tube (102) to form a hollow core region (108) and an integrated aligning element (112) configured to hold the plurality of second tubes (106) at a predetermined position with respect to the first cylindrical hollow tube (102). In particular, the integrated aligning element (112) is a single component element. Further, the integrated aligning element (112) is configured to be inserted on at least one end (130) the first cylindrical hollow tube (102).

## Description

### TECHNICAL FIELD

Embodiments of the present disclosure relate to the field of optical fiber cables and more particularly relates to a hollow core optical fiber perform assembly.

This application claims the benefit of Indian Provisional Application No. IN202511038012, titled "HOLLOW CORE FIBER PERFORM ASSEMBLY" filed by the applicant on April 21, 2025, which is incorporated herein by reference in its entirety.

### Background Art

Optical fiber is increasingly being used for a variety of applications, including broadband applications such as voice, video and data transmissions. It is a current trend in telecommunications to use optical fibers in place of the more conventional transmission media. As a result, fiber optic communication systems are becoming prevalent in part because service providers want to deliver high bandwidth communication capabilities to customers.

Solid core fibers are suitable for a wide range of applications but can suffer from higher latency, higher non-linear effects, and higher dispersion while a hollow core fiber offers lower latency, reduced non-linear effects, and lower dispersion, making it advantageous for specific high-performance applications. The hollow-core fiber is an optical fiber which guides light essentially within a hollow region, so that only a minor portion of the optical power propagates in the solid fiber material (typically a glass).

The existing hollow-core fibers offer significant advantages, such as lower signal attenuation and faster transmission speeds, but their manufacturing presents several challenges. One key issue is non-accurate aligning and positioning of multiple anti-resonant cladding tubes within a jacket tube along with ineffective pressurization capability.

US patent application US11215751B2 uses multiple spacing elements to secure the anti-resonant cladding tubes, but misalignment can still occur, affecting hollow-core fiber performance.

Another US patent application US20240036248A1, filling gaps between nested cladding tubes with smaller cladding material ensures their position but adds complexity, increases production costs, and can lead to performance inconsistencies due to varying material properties.

Yet another US patent application US20240034665A1, lacks the need of simple alignment of resonant tubes as well as an effective way to provide positive pressure in the HCF preform assembly. The prior art uses multiple alignment steps which increases complexity as well increases wastage of HCF preform.

Another challenge in prior arts is maintaining precise pressure conditions during the drawing process. The stack-and-draw technique, as described in a literature entitled "Stack, seal, evacuate, draw," uses a slit in the jacket tube to apply positive pressure. While this method helps form the hollow-core fiber, it can lead to mechanical issues like leaks or deformations in the jacket tube, which complicate the process. These difficulties hinder the scalability and cost-effectiveness of hollow-core fiber production, highlighting the need for improved manufacturing methods.

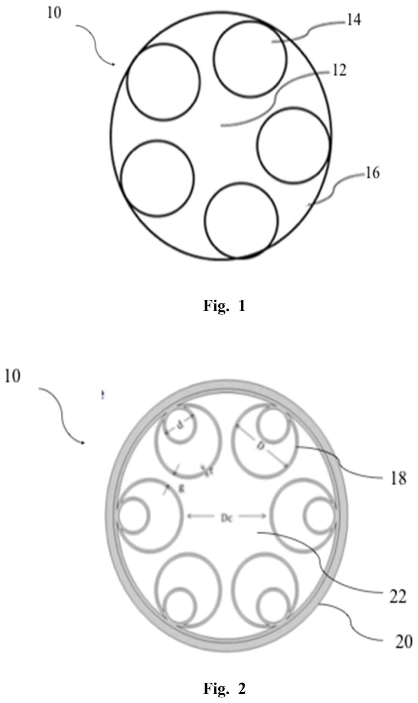

As illustrated in Fig. 1 a hollow core anti-resonant node-less fiber (hereinafter interchangeably referred as hollow core anti-resonant fiber or hollow core fiber) (10). An optical signal in the hollow core anti-resonant fiber (10) propagate in an air core region (12) surrounded by a plurality of anti-resonant tube elements (14). Guidance is based on an anti-resonance from the thin glass tube (16) constituted by the non-touching tubes surrounding the hollow core.

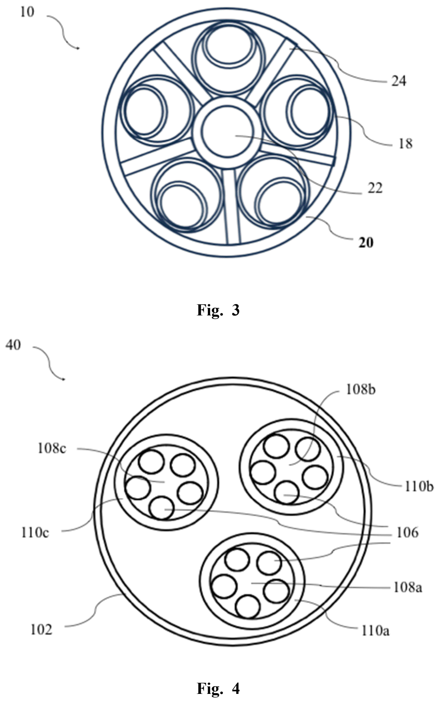

Further, Fig. 2 and Fig. 3 illustrates a first critical step while drawing of nested anti-resonant node less fiber (NANF)(10) (i.e., hollow core fiber) is proper and accurate alignment of the nested anti resonant (AS) tubes (18) inside a jacket tube (20) to form an air core region (22). As shown below in Figure 3, a hollow core fiber (HCF) preform is made by stacking AS tubes (18) inside the jacket tube (20). After the AS tubes stacking, one or more spacing elements, spacing rods, support tubes (24) are placed on both top and bottom side of the HCF preform to keep the AS tubes in a target position. The need of one or more spacing plates, spacing rods, support tubes (24) leads to manufacturing of different sized rods, plates and tubes, which is time consuming and not precise to position the AS tubes (18) inside the jacket tube (20) at the target position.

Because of multiple spacing components as required for alignment of AS tubes (18), it becomes complex and challenging in the known techniques of assembling of HCF preform. A second critical step while drawing NANF (10) hollow core fiber is individual pressurization of the air core region (22) and the AS tubes (18) with differential pressure.

In one of the known methods in the prior art, UV curable epoxy resins are used to separate the core region and the AS tubes. Another known method in the prior art is to create a slit and close one side of the HCF, perform assembly and reverse, closing another side with positive pressure. Both the known methods increase process steps, complexity and are inefficient.

Another major drawback of the known methods is that 30% to 40% of the HCF preform can't be drawn. In the first method, the UV resins will melt and reach up to 1/3^{rd} region from the top end of the HCF preform. In the second method, slit will get closed at around 70% draw length of the HCF preform leads to wastage of the HCF preform.

Accordingly, to overcome the disadvantages of the prior arts, there is a need to provide a better HCF drawing technique to solve the aforementioned problems. The present disclosure provides an anti-resonant hollow-core fiber and a preform for anti-resonant hollow-core fibers, and a method for producing thereof.

### SUMMARY OF THE DISCLOSURE

The present disclosure provides a hollow core glass preform assembly that facilitates precise positioning of the second tubes within the first cylindrical hollow tube using a single-component integrated aligning element. By integrating alignment and support functions into a single element, the assembly allows for improved reproducibility during preform preparation, reduces the number of handling steps, and provides controlled conditions for subsequent pressurization during the drawing process. These features contribute to more efficient manufacturing and improved optical performance of the resulting hollow core fiber.

Embodiments of the present disclosure relates to a hollow core glass preform assembly comprising;a first cylindrical hollow tube defined by a first diameter;a plurality of second tubes disposed within the first cylindrical hollow tube to form a hollow core region; and an integrated aligning element configured to hold the plurality of second tubes at a predetermined position with respect to the first cylindrical hollow tube, where the integrated aligning element is a single component element, where the integrated aligning element is configured to be inserted on at least one end the first cylindrical hollow tube.

The integrated aligning element is designed to simultaneously hold multiple second tubes in predetermined positions and facilitate controlled pressurization of the hollow core region and the second tubes. The element includes through holes and groove features adapted to various tube geometries, enabling a compact and unified assembly. This configuration supports precise alignment and pressure control in a manner that provides improved preform stability and consistency during fiber drawing

The combination of precise alignment and the ability to apply individual pressure to each second tube and the hollow core region provides a synergistic technical effect. The arrangement ensures consistent positioning of the tubes, enhances drawing reproducibility, and contributes to low attenuation and confinement loss in the resulting hollow core fiber. The integration of these features into a single assembly provides practical advantages in terms of manufacturing efficiency and fiber performance, which may not be readily achieved with separate alignment and pressurization elements.

While techniques for aligning hollow core fiber preforms and applying pressure are known individually, the present disclosure combines these aspects in a coordinated and integrated manner. The resulting assembly provides improved handling, alignment precision, and controlled pressure application, supporting reliable production of hollow core fibers with consistent structural and optical properties.

According to the first aspect of the present disclosure, the integrated aligning element has a plurality of through holes for each second tube of the plurality of second tubes to protrude through the integrated aligning element, when the integrated aligning element is configured to be inserted at a top end of the first cylindrical hollow tube. In particular, the integrated aligning element has a plurality of groove features to hold each second tube of the plurality of second tubes, when the integrated aligning element is configured to be inserted at a bottom end of the first cylindrical hollow tube. Further, the integrated aligning element has a central hole positioned near the central axis of the hollow core glass preform assembly such that a perpendicular distance between a center of the central hole and the central axis is less than 0.5 mm.

According to the second aspect of the present disclosure, the integrated aligning element is inserted in 3 to 10% of longitudinal length of the first cylindrical hollow tube.

According to the third aspect of the present disclosure, the integrated aligning element comprises a circumferential groove configured to attach a holding mechanism. It further comprises one or more spacer plate placed above the protruded second tubes, where the one or more spacer plate comprises a pressure inlet configured to enable application of positive pressure in the plurality of second tubes. Specifically, each second tube of the plurality of second tubes is a cylindrical tube defined by a second diameter, where the second diameter is less than the first diameter.

According to the fourth aspect of the present disclosure, the plurality of second tubes has at least one or a down doped region or an Alumina doped region. Further, the plurality of second tubes has at least one or an up doped region or the plurality of second tubes are free from any dopants.

According to the fifth aspect of the present disclosure, the first cylindrical hollow tube has a down doped region or an alumina barrier region. Further, a ratio of cross-sectional area of the first cylindrical hollow tube and a sum of cross-sectional area of the plurality of second tube is in a range of 2 to 5.

According to the sixth aspect of the present disclosure, a ratio of cross-sectional area of the first cylindrical hollow tube and a sum of cross-sectional area of the plurality of second tube is in a range of 2.5 to 4. Further, each second tube of the plurality of second tubes comprising at least one third tube positioned within each second tube.

According to the seventh aspect of the present disclosure, the first cylindrical hollow tube is defined by a first longitudinal length and the second tube is defined by a second longitudinal length such that the first longitudinal length is less than the second longitudinal length. The integrated aligning element is made of one of a pure silica glass, soft glass, or polymer material. Further, a hollow core optical fiber is manufactured using the hollow core preform assembly. In various embodiments, the integrated aligning element may be fabricated from materials including silica glass, soft glass, polymers, or chalcogenide glass. The skilled person may select the material based on cost, optical properties, or mechanical strength, without departing from the inventive concept of maintaining precise alignment of the second tubes.

According to the eighth aspect of the present disclosure, the first cylindrical hollow tube has a uniform wall thickness along its entire longitudinal length, within a tolerance of ±5% of the nominal wall thickness. Moreover, the second tubes are arranged in a radial pattern inside the first cylindrical hollow tube with an angular separation between each second tube of greater than or equal to 55 degrees.

According to the ninth aspect of the present disclosure, the integrated aligning element is designed with a stepped outer surface to facilitate secure insertion into the first cylindrical hollow tube and prevent axial movement during handling. Further, the second tubes are arranged in a staggered pattern with respect to the first cylindrical hollow tube, creating a symmetrical geometry along the longitudinal axis of the hollow core glass preform assembly.

According to the tenth aspect of the present disclosure, the integrated aligning element comprises a series of radially disposed pins that precisely position each second tube at a predetermined distance from the central axis of the first cylindrical hollow tube.

Another embodiment of the present disclosure discloses a method for manufacturing a hollow core optical fiber having a hollow core region extending along a longitudinal axis of the hollow core optical fiber, the method comprising forming an intermediate hollow core glass preform assembly, where the intermediate hollow core glass preform assembly comprising a first cylindrical hollow tube;a plurality of second tubes disposed inside the first cylindrical hollow tube to form the hollow core region; and an integrated aligning element configured to be inserted at one of the end of the first cylindrical hollow tube for holding each second tube of the plurality of second tubes; and drawing the intermediate hollow core glass preform assembly in a furnace to obtain the hollow core optical fiber in presence of positive pressure.

Further, holding the plurality of second tubes comprising arranging each second tube at a predetermined position with respect to the first cylindrical hollow tube.

In accordance with an embodiment of the present disclosure, the method further comprising, stretching the intermediate hollow core glass preform to obtain a low diameter hollow core glass preform.

According to the eleventh aspect of the present disclosure, the method further comprises, applying individual pressure in the hollow core region and each second tube of the plurality of second tubes.

According to the twelfth aspect of the present disclosure, the method further comprises applying positive pressure in the hollow core region via a central hole in the integrated aligning element.

In accordance with an embodiment of the present disclosure, where the integrated aligning element is configured to be inserted at a top end of the first cylindrical hollow tube such that each second tube of the plurality of second tubes protrudes through a plurality of through holes configured in the integrated aligning element.

In accordance with an embodiment of the present disclosure, an individual positive pressure is applied to each protruded second tube of the plurality of second tubes. Further, the integrated aligning element is configured to be inserted at a bottom end of the first cylindrical hollow tube such that each second tube of the plurality of second tubes is fixed in a plurality of groove features in the integrated aligning element.

In accordance with an embodiment of the present disclosure, the method further comprises applying one or more coating layers on the drawn hollow core optical fiber to obtain a coated optical fiber, wherein a coating thickness of the one or more coating layers is in a range of 20 microns to 100 microns

In accordance with an embodiment of the present disclosure, the hollow-core optical fiber has at least one of (i) a minimum confinement loss of a fundamental mode of an optical signal propagating in the hollow-core optical fiber is less than or equal to 0.05 dB/km at 1550 nm or (ii) an attenuation of less than or equal to 0.1 dB/km at 1550 nm.

The hollow core optical fiber produced using the claimed method exhibits superior optical performance due to the precise alignment and individual pressurization enabled by the integrated aligning element. For example, the minimum confinement loss of the fundamental mode is ≤0.05 dB/km at 1550 nm and attenuation is ≤0.1 dB/km, which are improvements over known hollow core fiber designs.

The foregoing objectives of the present disclosure are attained by employing a hollow core fiber.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a snapshot illustrating a cross-sectional view of node-less anti-resonant hollow core fiber known in the art.
Fig. 2 is a snapshot illustrating a cross-sectional view of node-less double nested anti-resonant hollow core fiber known in the art.
Fig. 3 is a snapshot illustrating a cross-sectional view of HCF preform assembly known in art having multiple spacing elements used for alignment of second tube (anti-resonant tubes).
Fig. 4 is a snapshot illustrating cross-sectional view of multicore HCF preform assembly in accordance with a second embodiment of the disclosure;
Fig. 5 is a snapshot illustrating a hollow core glass preform assembly in accordance with a first embodiment of the disclosure;
Fig. 6A, Fig. 6B and Fig. 6C is a snapshot illustrating a double nested tubes, a triple nested tubes and four tubes are nested respectively in accordance with a second embodiment of the disclosure;
Fig. 7 is a snapshot illustrating a top plug dimension in accordance with a first embodiment of the disclosure;
Fig. 8 is a snapshot illustrating a bottom plug dimension in accordance with a second embodiment of the disclosure;
Fig. 9 is a snapshot illustrating a hollow core glass preform assembly dimensions in accordance with a second embodiment of the disclosure;
Fig. 10A is a snapshot illustrating a top view of top plug for elliptical resonant tubes in circular pattern in accordance with a second embodiment of the disclosure;
Fig. 10B is a snapshot illustrating a top view of top plug for semicircular resonant tubes in circular pattern in accordance with a second embodiment of the disclosure; and
Fig. 11 is a flowchart illustrating a process for preparation of hollow core fiber in accordance with a first embodiment of the disclosure.

The optical fibre cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features. Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

Fig. 4 illustrates a multicore anti-resonant fiber(MC-ARF) (40) with more than one air core region (108) formed inside a first cylindrical hollow tube (102). In particular, a plurality of second tubes (106) are placed inside each third cylindrical hollow tube (110a, 110b, 110c) of a plurality of third cylindrical hollow tube (110) to form the more than one air core regions (108a, 108b, 108c). Moreover, the first cylindrical hollow tube (102) is defined by a first diameter and a first thickness, the plurality of second tubes (106) are defined by a second diameter and the plurality of third cylindrical hollow tube (110) are defined by a third diameter and third thickness. Further, the first diameter and third diameter is greater than the second diameter and first diameter is greater than third diameter.

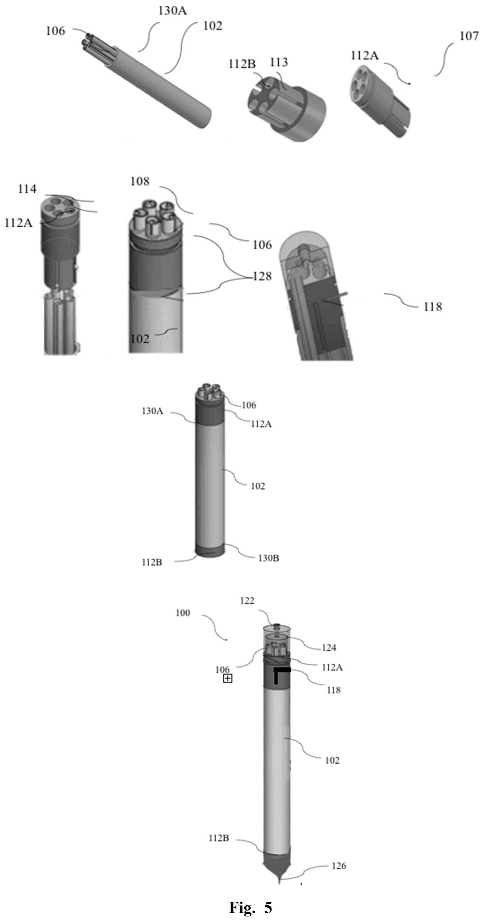

Fig. 5 illustrates a hollow core glass (100) with an integrated aligning element (112) is configured to hold the plurality of second tubes (106) at a predetermined position with respect to the first cylindrical hollow tube (102). In particular, the integrated aligning element (112) is a single component element. Moreover, the integrated aligning element (112) is configured to be inserted on at least one end (130) the first cylindrical hollow tube (102). Further, the integrated aligning element (112) has a plurality of through holes (114) for each second tube (106) of the plurality of second tubes (106) to protrude through the integrated aligning element (112).

In accordance with an embodiment of the present disclosure, when the integrated aligning element (112) is configured to be inserted at a top end (130A) of the first cylindrical hollow tube (102), the integrated aligning element (112) has a plurality of groove (113) features to hold each second tube of the plurality of second tubes (106).

In accordance with an embodiment of the present disclosure, when the integrated aligning element (112) is configured to be inserted at a bottom end of the first cylindrical hollow tube, the integrated aligning element (112) has a central hole positioned near the central axis of the hollow core glass preform assembly such that a perpendicular distance between a center of the central hole and the central axis is less than 0.5 mm.

In accordance with an embodiment of the present disclosure, the integrated aligning element (112) is inserted in 3 to 10% of longitudinal length of the first cylindrical hollow tube. Further, the integrated aligning element (112) comprises a circumferential groove configured to attach a holding mechanism. The plurality of through holes (114) of the integrated aligning element (112) incorporates the plurality of third cylindrical hollow tubes (110) of Fig. 4 to obtain an intermediate multicore HCF glass preform assembly which is further drawn to a MC-ARF (40).

In accordance with an embodiment of the present disclosure, the integrated aligning element (112) is one of a top integrated aligning element (hereinafter interchangeably referred as top plug) (112A) and a bottom integrated aligning element (hereinafter interchangeably referred as bottom plug) (112B). The multiple second tubes (106) are inserted into the first cylindrical hollow tube (102)which is aligned at their predefined position using either one or both of the top and bottom integrated aligning elements (112A and 112B).

Further, at least one end (130) comprises a first end (130A) for attachment of the top plug (112A) and a second end (130B) for attachment of the bottom plug (112B).

In accordance with an embodiment of the present disclosure, the hollow core glass preform assembly (100) as shown in Fig. 5 comprises a one or more spacer plate (124) placed above the protruded second tubes (106). In particular, one or more spacer plates (124) comprises a first pressure inlet (122) configured to enable application of positive pressure in the plurality of second tubes (106). Moreover, one or more spacer plate (124) can be a part of the top integrated aligning element (112) or can be separately placed above the top integrated aligning element (112) to seal the top end portion of the intermediate assembly of the hollow core fiber preform.

Further, the spacer plate (124) includes the first pressure inlet (122), used as a mechanism to provide individual pressure to each second tube (106). The different pressure is being applied in both the core region (108) and the second tubes (106) via integrated aligning element (112) in presence of one or more gases. The gases include but not limited to Ar and N2.

In accordance with an embodiment of the present disclosure, the integrated aligning element (112) as specified in Fig. 5 comprises the top plug (112A) and the bottom plug (112B). The top plug(112A) consists of a separate cross-sectional hole (114) corresponding to each second tube of the plurality of the plurality of the second tube (106). The bottom end surface of the bottom plug (112B) is completely sealed, forming a tapered shape of the bottom plug (112B) for drawing the hollow core fiber (126).

In accordance with an embodiment of the present disclosure, the hollow-core fibers (HCFs)guide light in air, rather than in glass. This means that HCFs have low latency, a low nonlinear coefficient, and a high damage threshold. Further, they can guide light at wavelengths where solid materials have high attenuation due to Rayleigh scattering, IR absorption, or photo darkening. The HCF can transmit high-power lasers, and are used in chemical and biomedical sensing.

In accordance with an embodiment of the present disclosure, a first cylindrical hollow tube (102) having a predefined wall thickness in which multiple cladding elements (second tubes) (106) are inserted to form a hollow core or air core region along the central longitudinal axis of the first cylindrical hollow tube (102). This is the large tube that forms the outer boundary of the hollow core region. It can be made of silica glass or other optically suitable materials.

In accordance with an embodiment of the present disclosure, the integrated aligning element (112) is a single component that holds the second tube (106) in place relative to the first cylindrical hollow tube (102). Further, the integrated aligning element is made up of silica glass which is of low cost or soft silica glass.

In accordance with an embodiment of the present disclosure, the integrated aligning element (112) can be a top plug(112A) and a bottom plug (112B). In particular, the top plug (112A) will act as aligning mechanism and also help to achieve individual pressurization of the second tubes (106) and the air core region (108). Moreover, the bottom plug (112B) holds the second tubes (106) (small diameter cylindrical cladding tube) at the bottom end (130B) of the first cylindrical hollow tube (102) so that the second tube (106) does not egress out (slip out) from the bottom end (130B) of the hollow core glass preform (100). Through the plurality of through holes (114)the second tubes (106) protrude.

In accordance with an embodiment of the present disclosure, the integrated aligning element (112) simplifies the alignment of second tubes (106) inside the first cylindrical hollow tube (102) by using a single, precisely designed component. This removes the need for multiple spacer rods, plates, or support tubes (24).

In accordance with an embodiment of the present disclosure, the method includes applying individual pressure to each second tube (106) and the hollow core region (108) using the integrated aligning element (112) with a central hole connected to the second pressure inlet port (118). Further,, the plurality of through holes (114) could vary based on the number of second tubes (106). Different designs of hollow core fiber assembly are shown below in different images, number of plurality of through holes (114) and shape of the plurality of through holes (114) in the integrated aligning element (112) is designed based on the required hollow core pattern.

In various embodiments, the integrated aligning element may be fabricated from materials including silica glass, soft glass, polymers, or chalcogenide glass. The skilled person may select the material based on cost, optical properties, or mechanical strength, without departing from the inventive concept of maintaining precise alignment of the second tubes.

The second tubes may be circular, semi-circular, elliptical, or other shapes suitable for forming a hollow core region. The choice of shape may vary depending on the desired optical characteristics and the specific preform configuration.

In certain embodiments, the second tubes may comprise double nested, triple nested, or more complex nested arrangements. Additionally, more than one hollow core region may be formed within the first cylindrical hollow tube to obtain multicore fibers.

Positive pressure may be applied to each second tube and the hollow core region using one or more gases, such as argon, nitrogen, or combinations thereof. The applied pressure may be uniform or differential across the tubes and core region to optimize drawing and fiber performance.

The integrated aligning element functions to hold the second tubes in precise position and allow controlled pressurization of the hollow core region. Variations in material, tube shape, or arrangement may be employed without departing from the principles of the invention, thereby providing a wide range of possible implementations.

Alternative embodiments, including differing material compositions, tube arrangements, and pressurization configurations, may be used individually or in combination. Each such embodiment may form the basis of a separate claim or application, allowing protection of variations that maintain the inventive principles.

The invention provides a general concept of an integrated aligning element and hollow core preform assembly, which enables precise positioning of cladding tubes and controlled pressurization during fiber drawing. This concept applies across multiple materials, shapes, arrangements, and pressurization techniques, providing a broad inventive framework beyond the specific examples illustrated.

In an embodiment of the disclosure the shape of the holes includes but is not limited to circular, slotted, or elliptical to accommodate different second tube shapes.

In accordance with an embodiment of the present disclosure, the one or more spacer plate (124) can be a part of the top of the top plug or can be separately placed above the top plug (112A) to seal the top end portion (130A) of the intermediate assembly of the HCF preform. In particular, the spacer plate (124) includes a first inlet (122), used as a mechanism to provide individual pressure to each second tube (AS tube) (106).

In general, the Anti-resonant fibers (ARFs) are HCFs that have a microstructure consisting of a hollow core surrounded by a cladding formed of thin webs of material, usually fused silica, that provide an anti-resonant reflection condition to the light being guided in the hollow core. The AR-HCF can have low nonlinearity and high damage threshold. The AR-HCF can have a wide transmission bandwidth and low loss.

In accordance with an embodiment of the present disclosure, to achieve high confinement and very low scattering loss in the HCF, nested anti-resonant tubes (second tubes) (106) are placed to form the air core region. More than one nested anti-resonant cladding tubes (second tubes) (106) is placed in a first cylindrical hollow tube (102). Further, the anti-resonant tubes (second tubes) (106) are formed of more than two concentric arrangements of cladding tubes. Many other configurations of cladding tubes (nested and not nested) can be used to provide an equivalent orthogonal loss differential for maintaining light polarisation. Nested Anti-resonant HCF is one of double nested anti-resonant HCF.

In accordance with an embodiment of the present disclosure, dual-core anti-resonant fibers (DC-ARFs) comprises two air core regions formed inside a first cylindrical hollow tube. Further, the two hollow core fiber preform are inserted into a first cylindrical hollow tube (102)which is aligned at their predefined position using the top and bottom plug (112) designed as per the present disclosure.

In accordance with an embodiment of the present disclosure, different shapes and sizes of the second tube (106) can be made in single or multiple steps (Double, triple, etc...). In particular, the plurality of second tubes (106) (interchangeably referred as anti-resonant tubes OR the small diameter cylindrical cladding tubes) are placed inside the first cylindrical hollow tube (interchangeably referred as jacket cladding tube) (102) in a predefined arrangement to form a hollow core region (108) along the central longitudinal axis of the first cylindrical hollow tube (102). Further, the second tube (106) can be double nested tubes or multi-nested tubes or any combinations to achieve desired waveguide parameters of the hollow core fiber.

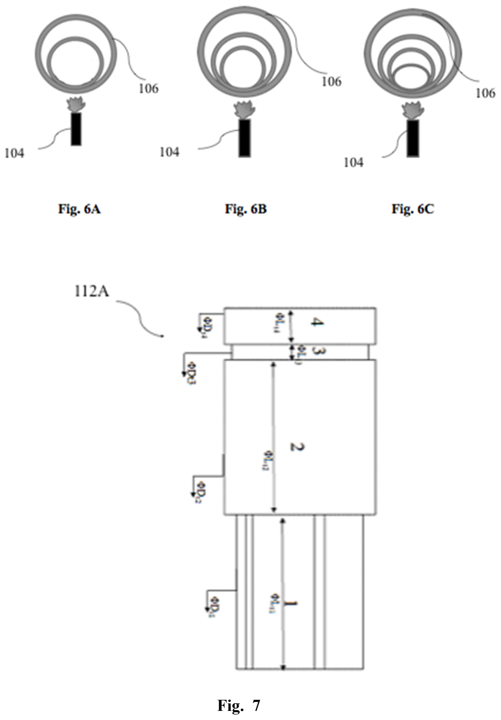

In accordance with an embodiment of the present disclosure, the double nested AS tubes are formed by fusing two tubes of different diameter with the help of a hydroxy burner (104) as shown in Fig. 6A. In particular, the Anti-resonant tubes (106) usually consist of materials transparent to the operating light, such as glass (especially doped or undoped SiO₂), plastics (especially polymers), composites or crystalline materials. The diameter can vary to optimize the hollow core region's functionality, from a smaller size to micro-structures.

In accordance with an embodiment of the present disclosure, the tube shape includes but is not limited to cylindrical or other geometric shapes.

Fig. 6B and Fig. 6C illustrates the fusing mechanism of the second tubes (106), where each second tube of the plurality of second tubes (106)includes but is not limited to a double nested tube and a triple nested tube or four tubes are nested. Further, the double nested tube and triple nested tube includes but is not limited to cylindrical tube and a semi cylindrical tube (cut from cylindrical tube).

In accordance with an embodiment of the present disclosure, a nested anti-resonant node less fiber (NANF) refers to a type of hollow-core optical fiber (126) where multiple concentric layers of cladding tubes are arranged in a nested structure as shown in Fig. 6, designed to minimize light loss by utilizing the principle of anti-resonant reflection, effectively guiding light through the hollow core without any "nodes" where the light intensity would normally drop to zero, allowing for very low attenuation and high transmission capabilities over long distances. The hollow core optical fiber (126) consists of a hollow core (108) surrounded by multiple layers of cladding tubes with precisely engineered diameters and spacing, creating a nested pattern. Light is guided by reflecting off the interfaces between the cladding tubes at specific wavelengths where the reflections interfere destructively, preventing light from escaping into the core. Unlike conventional hollow-core fibers, NANF design avoids the formation of "nodes" in the light field distribution, leading to more efficient light transmission.

In accordance with an embodiment of the present disclosure, a double nested Anti-resonant node less fiber (DNANF) is a type of hollow-core optical fiber that utilizes a unique design with multiple nested layers of cladding tubes, engineered to minimize light loss by creating an "anti-resonant" effect, where light is effectively confined within the hollow core due to destructive interference, resulting in extremely low attenuation levels, often comparable to standard solid-core fibers, "node less" indicates that the fiber design avoids any points where light could be significantly disrupted or scattered within the core.

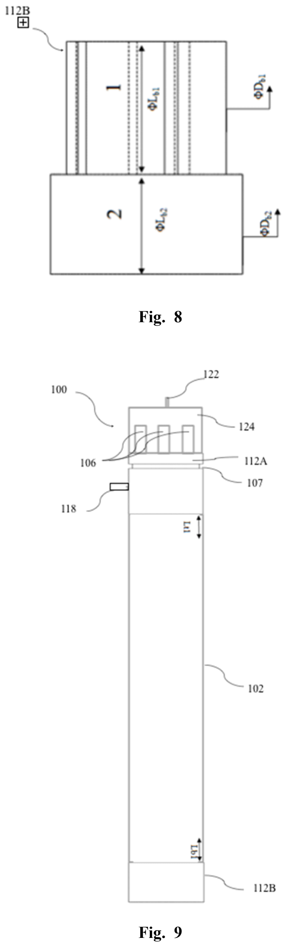

Fig. 7, Fig. 8 and Fig. 9 illustrate the dimensions of the top plug (112A), the bottom plug (112B) and the hollow core perform (100) respectively. In an aspect of the present disclosure there is provided a method of manufacturing the hollow core fiber (126).

In accordance with an embodiment of the present disclosure, the terms
D, L signifies diameter and length,
subscript c, t, b signifies first cylindrical hollow tube (102), top plug (112A),
bottom plug (112B),
second subscript 1, 2... indicates parts number as shown in Fig. 7, Fig. 8 and Fig. 9.

Further, the top plug (112A) and bottom plug (112B) (integrated aligning element) can be manufactured by drilling in case of simple circular shape or made by melting quartz and pouring in Mold (casting method) in terms of non-circular resonant tubes. Similarly, the different parts of top and bottom plugs (112) can be made as a single unit or multiple units later fused together.

Overall dimensional relationship
1. Dt1= Db1= Dc_inner - 2 * clearance (clearance will be 0.2 to 2.5mm), where Dc_inner is the inner diameter of the first cylindrical hollow tube (102)
2. Dt2 = Dt4 = Db2 = Dc_outer, where Dc_outer is the outer diameter of the first cylindrical hollow tube (102)
3. Lt1= Lb1 (Range 2cm to 10cm)
4. $Lt 2 = Lt 3 + Lt 4$
5. $Lt 4 = Lb 2$
6. Lt3 and Dt3 may vary based on preform holding arrangement in draw tower.

In accordance with an embodiment of the present disclosure, the length of each second tube (interchangeably referred as anti-resonant tube or small diameter cylindrical tubes) (106) = Lc+Lt1+Lt2+Lt3+Lt4+100mm. A small axial central hole of diameter in the range of 2mm to 5mm pass through length Lt1 and half the length of Lt2. This pathway connects with radial holes through part 2. This perpendicular pathway will be used to pressurize the cylinder. In top plug (112A), there will be circular/elliptical (or any required shape to protrude small diameter cylindrical tubes) pattern of holes to allow the anti-resonant tubes (106) pass through from part 1 to part 4 (Lₜ₁, Lₜ₂, Lₜ₃, Lₜ₄). In bottom plug (112B), there will be circular pattern of holes (113) (or any required shape to insert and hold the small diameter cylindrical tubes) to allow the anti-resonant tubes (106) pass through only part 1 (L_{b1}) not through part 2 (L_{b2}).

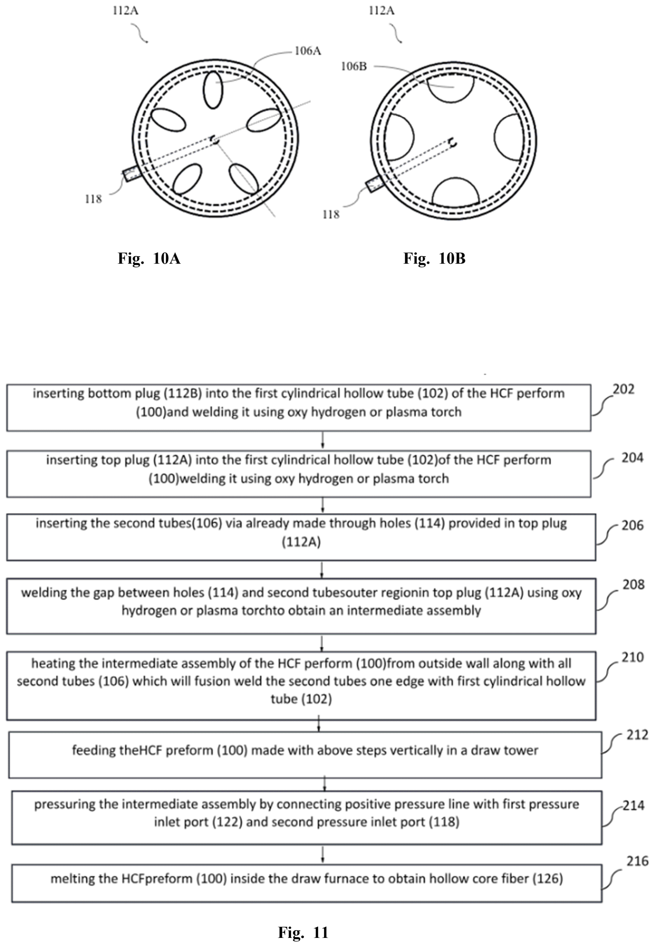

In accordance with an embodiment of the present disclosure, each hole (113, 114) in the circular pattern of top plug (112A) and bottom plug (112B) may be of any shape oval, elliptical, semicircular etc and of any number as shown in Fig. 10A and Fig. 10B which illustrates a top view of top plug (112A) for elliptical second tube (106A) in circular pattern and top view of top plug (112A) for semicircular second tube (106B) in circular pattern.

Further, the circular pattern of holes passing through top and bottom plug is decided based on the number, placement and design of the resonant tubes placed inside the cylinder. For example, top view of top plug for five numbers of elliptical anti-resonant tubes (106A) and another case four numbers of semicircular anti-resonant tubes (106B) are shown in Fig. 10A and Fig. 10B.

In accordance with an embodiment of the present disclosure, when the cross-sectional shape of the second tubes (106) are a combination of circular and semi-circular, the through holes in the top integrated aligning element (112A) is respectively same to accommodate the second tubes (106) while bottom integrated aligning element (112B) may not have any hole and may be used for sealing the bottom end of the first cylindrical tube (102). Further, the top integrated aligning element (112A) may individually handle the alignment as well as pressurization of the HCF glass preform assembly (100).

In accordance with an embodiment of the present disclosure, the top plug comprises a circumferential groove (interchangeably referred as handle portion) (107) where handles are attached to vertically hold the HCF preform (100) while drawing HCF (126) in a draw furnace. In particular, the circumferential groove (107) around the integrated aligning element (112) to facilitate attachment to the holding mechanism (when the aligning element is placed at top of the HCF preform assembly). The circumferential groove (107) could be at the top, middle, or bottom of the integrated aligning element depending on the assembly design.

In accordance with an embodiment of the present disclosure, the cross-sectional width of the groove (113) is between 2 mm to 6 mm (preferably 3 mm). Further, the handle portion (107) could be conFig. d for clamping, screwing, wielding or adhesive attachment.

In accordance with an embodiment of the present disclosure, the gases include Ar or Nitrogen, or combination of gases are used to pressurize each individual second tube (106) and the air core region (108) of the hollow core fiber preform assembly as shown in Fig. 5 while drawing the HCF to obtain hollow core fiber (126).

In accordance with an embodiment of the present disclosure, the method of manufacturing the hollow core optical fiber (126) comprises the steps of inserting bottom plug (112B) into the a first cylindrical hollow tube (102) of the HCF perform and welding (128) it using oxy hydrogen or plasma torch (202); inserting top plug (112A) into the first cylindrical hollow tube(102) of the intermediate assembly of the HCF perform; welding (128) it using oxy hydrogen or plasma torch; inserting the second tubes (106) made already through the holes (114) provided in top plug (112A); welding (128) the gap between holes (114) and second tubes outer diameter in top plug (112A) using oxy hydrogen or plasma torch; heating the intermediate assembly (100) of the HCF perform from outside wall along with all second tubes inside the first cylindrical hollow tube which will fusion weld (128) the resonant tubes one edge with intermediate assembly; feeding the hollow core preform assembly (100) made with above steps is vertically in a draw tower; pressuring the intermediate assembly by connecting positive pressure line with second inlet port (118) provided in top plug (112A); and inserting the hollow core preform inside the draw furnace and hollow core optical fiber (126) drawn.

In accordance with an embodiment of the present disclosure, the preform components of the preform consist of different silica glass qualities, the viscosity of the components increasing from the outside to the inside to a first order approximation. In addition to fluorine, other dopants such as Al₂O₃, nitrogen, chlorine, and hydroxyl groups can also be used to adjust the viscosity. The jacket tube or the second tube may contain any combination of dopants (down dopants or up dopants) to obtain a desired hollow core optical fiber (126).

In accordance with an embodiment of the present disclosure, during elongation, the primary preform is stretched. The stretching can take place without simultaneous collapse. Elongation can take place true to scale so that, for example, the shape and arrangement of components or constituents of the primary preform is reflected in the elongated end product. During elongation, however, the primary preform can also be drawn not true to scale and its geometry can be modified.

In accordance with an embodiment of the present disclosure, the integrated aligning element (112) includes a single component that holds the second tube (106) in place relative to the first cylindrical hollow tube (102). The silica glass has properties as mentioned in Table 1:

**Table 1**

| | | |
|---|---|---|
| Density | Kg/cm³ | 2.2x10³ |
| Strength | KHN100 | 570± 10 |
| Tensile Strength | Pa(N/m³) | 4.8x10⁷ |
| Compression Strength | Pa | >1.1x10⁹ |
| (20°C-300°C) Coefficient of Thermal Expansion | cm/cm°C | 5.5x10⁻⁷ |
| (20°C) Thermal Conductivity | W/m°C | 1.2 to 1.5 |
| (20°C) Specific Heat | J/kg°C | 660± 10 |
| Softening Point | °C | 1630± 10 |
| Annealing | °C | 1180± 10 |

a. Soft glass typically consists of approximately 70-74% silica (SiO₂), 12-16% soda (Na₂O), and 5-10% lime (CaO).
   i. thermal conductivity of fused silica, a type of soft silica glass, is 0.5 to 2 W/m°K at 25°C
   ii. The density of soft silica glass, also known as fused silica, is approximately 2 to 2.5 g/cm³
b. One or more type of Polymer
c. Chalcogenide glass
   i. Density between 3 to 5 grams per cubic centimeter (g/cm3)
   ii. a very low thermal conductivity, usually on the order of 0.2 to 1 W/m-K

In accordance with an embodiment of the present disclosure, the plurality of holes (114) in the integrated aligning element (112) through which the second tubes (106) protrude. The plurality of holes (114) can vary based on the number of second tubes (106) as illustrated in Fig. 4 and Fig. 10A and Fig. 10B.

In accordance with an embodiment of the present disclosure, the shape of the plurality of holes (114) includes, but not limited to circular, slotted, or elliptical to accommodate different tube shapes as illustrated in Fig. 10A and Fig. 10B.

In accordance with an embodiment of the present disclosure, a groove (113) in the bottom plug (112B) holds the second tube (106) at the bottom end. In particular, the groove (113) feature is of similar shape as of second tube (106) formed in bottom plug (112B) placed at the bottom of the HCF preform (100) assembly. Further, the bottom end surface of the bottom plug (112B) is placed at the bottom of the hollow core fiber preform assembly (100) is completely sealed so that the plurality of second tubes (106) do not protrude out.

In accordance with an embodiment of the present disclosure, the plurality of holes in the integrated aligning element, positioned near the central longitudinal axis, allows for controlled application of pressure. The shape of the hole includes but is not limited to round, square, or oval. The size of the hole can vary for different pressures or application needs. The cross-sectional area of the central hole is between 2% to 5% of the cross-sectional area of the first hollow cylindrical tube.

In accordance with an embodiment of the present disclosure, the spacer plate includes but is not limited to one, two, three, four, fiver and so on. above the protruding second tubes (106) that can apply positive pressure to the second tube (106). The purpose of the one or more spacer plate is to provide variable pressure in all the second tubes as well as different pressure in the one or more nested third tube inside the second tube.

In accordance with an embodiment of the present disclosure, the material for the spacer plate includes but is not limited to glass, metal, or polymer. The shape of the spacer plate includes but is not limited to flat, stepped or raised sections to interact with the second tubes.

The application of positive pressure to the second tube and the hollow core region. In particular, the pressure inlet could be a tube or valve system attached to the spacer plate and the central hole of the integrated aligning element. Further, the pressure can be individual or uniform across all second tubes. Pressure can be different in the air core region as compared to the pressure applied in the second tubes (106).

In accordance with an embodiment of the present disclosure, the diameter of the second tube should be smaller than the first diameter. The diameter of the second tubes (106) range from sub-millimeter to several millimeters, based on design requirements. In an exemplary example, the diameter is between 3 mm to 10 mm. The diameter of second tubes (106) may vary depending on the number of second tubes (106) and inner diameter of the first cylindrical hollow tube (102). One of the one or more regions of the second tubes are doped to alter the optical properties. The doping can include materials like alumina, phosphates, or other rare-earth dopants for tailoring optical properties.

Fig. 11 illustrates a process for preparation of hollow core fiber (126).

In step (202) inserting a bottom plug (112B) into the first cylindrical hollow tube (102) of the HCF perform (100) and welding it using oxy hydrogen or plasma torch.

In step (204)inserting top plug (112A) into the first cylindrical hollow tube (102) of the HCF perform (100) and welding it using oxy hydrogen or plasma torch.

In step (206) inserting the second tubes (106) via already made through holes (114) provided in top plug (112A).

In step (208) welding the gap between holes (114) and the second tube outer region in top plug (112A) using oxy hydrogen or plasma torch to obtain an intermediate assembly. In step (210) heating the intermediate assembly of the HCF perform (100) from outside the wall along with all second tubes which will fusion weld the second tubes one edge with the first cylindrical hollow tube (102).

In step (212) feeding the HCF preform (100) made with above steps vertically in a draw tower.

In step (214) pressuring the intermediate assembly by connecting the positive pressure line with the first pressure inlet port (122) and the second pressure inlet port (118) provided in top plug (112A).

In step (216) melting the hollow core preform (100) inside the draw furnace to obtain the hollow core fiber (126).

The preform assembly may include one or more inlet ports or channels to apply positive pressure to the hollow core region and/or individual second tubes. Pressure may be applied uniformly across all tubes or individually to each tube or nested tube, allowing controlled expansion and stabilization during drawing. The pressure can be supplied using gases such as argon, nitrogen, or other inert or non-reactive gases suitable for hollow-core fiber fabrication.

In some embodiments, the integrated aligning element can be realized as a single unit or as multiple components joined together, either permanently or removably. Such modular construction enables the use of different aligner configurations for different preform designs, including dual-core or multi-core hollow fibers, without requiring separate alignment and pressurization assemblies.

The integrated aligning element may take various forms and configurations to hold the second tubes in a predetermined position relative to the first cylindrical hollow tube. For example, the element can include stepped surfaces, pins, or other geometries that constrain lateral and axial movement of the second tubes. These features can be adapted to accommodate circular, elliptical, semi-circular, or other cross-sectional shapes of the second tubes, providing flexibility in preform design.

In certain embodiments, the second tubes may themselves contain one or more nested tubes, forming double-, triple-, or quadruple-nested configurations. The integrated aligning element can accommodate these multi-nested arrangements by providing corresponding through holes or grooves, thereby supporting a range of hollow-core fiber designs with varying optical and mechanical properties.

The integrated aligning element can be manufactured from various materials, including pure silica glass, soft glass, polymers, or other optically and mechanically suitable materials. Manufacturing techniques may include drilling, molding, casting, or fusion processes. These variations allow adaptation to different fiber preform geometries, tube diameters, and process requirements.

The positions, dimensions, and spacing of the second tubes may vary depending on the desired hollow-core fiber properties. The integrated aligning element may include adjustable or fixed features to support specific angular separation between tubes, radial or staggered arrangements, or variable longitudinal lengths of the second tubes. Such flexibility enables the fabrication of hollow-core fibers with tailored attenuation, confinement loss, and modal properties.

After drawing, the hollow-core fiber may be coated with one or more layers of protective material, with thicknesses and compositions selected according to mechanical, environmental, and optical requirements. The coating process may include single- or multi-layer application, and can be performed in-line during drawing or as a separate step, ensuring compatibility with the preform assembly and maintaining optical performance.

In alternative embodiments, the hollow core region and the second tubes may be pressurized using dynamic, variable, or sequential pressure schemes, in which the pressure in each tube or group of tubes is independently varied during different stages of the draw. Such schemes enable control over wall thickness, tube deformation, and hollow core geometry, improving fiber performance while reducing material wastage.

The second tubes or nested tubes may include multiple materials or doped regions along their length, such as alumina-doped, phosphorous-doped, or undoped regions. This allows the tailoring of optical properties, thermal expansion, and viscosity gradients along the tube, providing enhanced confinement, reduced scattering, and improved draw stability.

The integrated aligning element may include movable or reconfigurable features, such as adjustable pins, sliding grooves, or modular inserts, allowing the same element to accommodate different numbers, sizes, or arrangements of second tubes. This versatility enables rapid adaptation to various hollow-core fiber designs, including single-core, dual-core, or multi-core configurations.

The first cylindrical hollow tube may have non-circular cross-sections, such as elliptical, polygonal, or other geometric shapes, to achieve specialized optical modes or polarization properties. The integrated aligning element may be correspondingly shaped to maintain precise alignment of the second tubes within these non-cylindrical preforms.

In some embodiments, the integrated aligning element may combine multiple functions, such as alignment, sealing, and pressure distribution, into a single component. The element may incorporate internal channels, stepped surfaces, or variable thickness regions to facilitate controlled pressurization, minimize material contact, and simplify assembly, thereby reducing process steps and improving reproducibility.

The preform assembly may include sensors, pressure monitoring ports, or flow channels integrated with the aligning element or spacer plates. Such features enable real-time monitoring of pressure, temperature, or fiber deformation during drawing, allowing closed-loop control to improve yield, minimize defects, and optimize fiber properties.

The arrangement, nesting, and cross-sectional shape of the second tubes may be adjusted to achieve specific optical properties, such as reduced confinement loss, minimal mode distortion, or low nonlinearity. The integrated aligning element supports these configurations by providing precise positional control of the second tubes while accommodating multi-nested or asymmetric designs.

The integrated aligning element provides positional control of the second tubes using a single component. This approach can contribute to improved uniformity along the hollow core, which may assist in achieving consistent optical properties and reduced confinement loss.

The use of the integrated aligning element combined with differential pressurization can help maintain the structural integrity of the hollow core preform during drawing, potentially allowing a larger portion of the preform to be converted into fiber, thereby enhancing material utilization.

By maintaining a controlled arrangement of the second tubes and supporting differential pressure, the hollow core fiber may exhibit improvements in optical transmission characteristics, such as reduced scattering or confinement loss, compared to less controlled arrangements.

Employing a single-component aligning element can simplify the preform assembly process and provide a reproducible setup, which may facilitate preparation of multiple preforms with similar structural characteristics.

The integrated aligning element can accommodate various multi-core or nested tube arrangements without necessarily requiring major modifications, supporting flexibility in designing hollow core fibers with tailored optical modes or polarization characteristics.

Individual or differential pressurization through the aligning element or spacer plate channels allows adjustment of tube wall deformation during drawing. This capability may contribute to more uniform fiber geometry and potentially reduced optical losses.

The concept of a single-component aligning element and modular pressure application can be extended to preforms with varying tube sizes, shapes, or arrangements. This flexibility may support the design of hollow core fibers with desired optical characteristics while maintaining manufacturability.

In certain embodiments, the hollow core optical fiber produced by the method of the invention may be employed in high-capacity data transmission systems, including optical interconnects for data centers, telecommunication networks, or high-speed computing environments. The reduced latency, low loss, and flexible routing enabled by the hollow core design make the fibers particularly suitable for dense, high-bandwidth optical links, while maintaining compatibility with conventional connectors and network equipment. Such applications may leverage single-core or multicore configurations, different tube arrangements, or alternative materials as disclosed herein, without departing from the underlying inventive concept.

In certain embodiments, hollow core optical fibers suitable for data center applications may have structural and dimensional characteristics tailored to optimize high-bandwidth performance. Such characteristics may include, but are not limited to: a hollow core diameter in the range of 10 µm to 100 µm to balance mode confinement and optical throughput; a plurality of anti-resonant cladding tubes with precise concentric or nested arrangements to reduce confinement loss and crosstalk; wall thickness of the cladding tubes controlled within ±5% of the nominal value for uniform optical guidance; a ratio of cross-sectional area of the outer cylindrical tube to the sum of the inner tubes in the range of 2 to 5 to maintain mechanical stability; and integrated aligning elements or plugs designed for precise positioning and differential pressurization during the draw process. Additional design considerations may include multicore or multi-clad arrangements, variable doping regions, or alternative geometric tube shapes to enhance bend tolerance, thermal stability, and signal fidelity in dense fiber bundles, without departing from the underlying inventive concept.

Advantageously, the hollow optical core preform minimizes material wastage by efficiently using differential pressure technique via the multiple inlets and alignment systems that improve drawing performance of the hollow core fiber (126). Further, the hollow core fiber preform structure, combined with the positive pressure system, ensures that the resulting hollow-core fiber exhibits minimal confinement loss and low attenuation.

## Claims

1. A method for manufacturing a hollow core optical fiber (126) having a hollow core region (108) extending along a longitudinal axis of the hollow core optical fiber (126), **characterized in that** steps of:
forming an intermediate hollow core glass preform assembly (100), where the intermediate hollow core glass preform assembly (100) comprising:
a first cylindrical hollow tube (102);
a plurality of second tubes (106) disposed inside the first cylindrical hollow tube (102) to form the hollow core region (108); and
an integrated aligning element (112) configured to be inserted at one of the end (130) of the first cylindrical hollow tube (102) for holding each second tube of the plurality of second tubes (106); and
drawing the intermediate hollow core glass preform assembly (100) in a draw furnace to obtain the hollow core optical fiber (200) in the presence of positive pressure.

2. The method as claimed in claim 1, wherein step of holding the plurality of second tubes (106) comprises arranging each second tube at a predetermined position with respect to the first cylindrical hollow tube (102).

3. The method of claim 1, further comprising stretching the intermediate hollow core glass preform to obtain a reduced-diameter hollow core glass preform.

4. The method of claim 1, further comprising applying individual pressure in the hollow core region (108) and in each second tube (106) of the plurality of second tubes.

5. The method of claim 1, wherein positive pressure is applied in the hollow core region (108) via a central hole in the integrated aligning element (112).

6. The method of claim 1, wherein the integrated aligning element (112) is configured to be inserted at a top end (130A) of the first cylindrical hollow tube (102).

7. The method of claim 1, wherein each second tube (106) protrudes through a plurality of through holes (114) formed in the integrated aligning element (112).

8. The method of claim 1, further comprising applying individual positive pressure to each protruded second tube (106) via a pressure inlet provided in one or more spacer plates of the intermediate hollow core glass preform assembly (100).

9. The method of claim 1, wherein the integrated aligning element (112) is configured to be inserted at a bottom end (130B) of the first cylindrical hollow tube (102).

10. The method of claim 1, wherein each second tube (106) is held in a corresponding groove (113) of the integrated aligning element (112).

11. The method as claimed in claim 1, wherein the method further comprises applying one or more coating layers on the drawn hollow core optical fiber (126) to obtain a coated optical fiber.

12. The method as claimed in claim 1, wherein a coating thickness of the one or more coating layers is in a range of 20 microns to 60 microns.

13. The method of claim 1, wherein the hollow core optical fiber (126) exhibits a minimum confinement loss of a fundamental mode of an optical signal propagating in the hollow core optical fiber of less than or equal to 0.05 dB/km at 1550 nm, or an attenuation of less than or equal to 0.1 dB/km at 1550 nm.

14. An intermediate hollow core glass preform assembly (100) **characterized in that**:
a first cylindrical hollow tube (102);
a plurality of second tubes (106) disposed inside the first cylindrical hollow tube (102) to form the hollow core region (108); and
an integrated aligning element (112) configured to be inserted at one of the end (130) of the first cylindrical hollow tube (102) for holding each second tube of the plurality of second tubes (106).

15. The intermediate hollow core glass preform assembly (100) of claim 14, wherein individual positive pressure is applied to each protruded second tube (106) via a pressure inlet provided in one or more spacer plates of the intermediate hollow core glass preform assembly (100).
